# EUROPEAN PATENT APPLICATION

(11) **EP 4 210 199 A1**
(43) Date of publication of application: **12.07.2023**
(21) Application number: 22216853.6
(22) Date of filing: 28.12.2022
(51) Int. Cl.: H02J 50/00, H02J 50/10, H02J 50/50

(54) **WIRELESS CHARGER ADAPTER**

(30) Priority: 05.01.2022 US 202217569418
(71) Applicant: Datalogic IP Tech S.r.l., 40012 Calderara di Reno (BO) (IT)
(72) Inventor: MOSCHINI, Roberto, I-40128 Bologna (IT)
(74) Representative: Porta & Consulenti Associati S.p.A.

(57) **Abstract**

A wireless charger adapter (302) may include a structural member, a receive inductor coil (320) supported by the structural member, an electrical circuit, and an output. The structural member may be placed in proximate location with a cradle of a wireless charging device (102) inclusive of a transmit inductor coil (318). The receive inductor coil (320) may inductively receive wireless power signals inductively transferred by the transmit inductor coil (318) of the wireless charging device (102). The electrical circuit may convert the wireless power signals received by the receive inductor coil (320) into electrical signals and the output may output the electrical signals from the electrical circuit to one or more external devices.

## Description

### BACKGROUND

Wireless power transfer systems include a wireless transmitting device and a wireless receiver device. The transmitting device generates a time-varying electromagnetic field that is used to transmit power wirelessly to the wireless receiver device. The wireless receiver device extracts power from the time-varying electromagnetic field and converts the power that is supplied to an electrical load. Wireless power transfer systems can eliminate the need for wires and electrical conductive contacts, which can increase mobility and convenience for users of the wireless power transfer systems. Wireless power transfer systems may be categorized as either near field (inductive) or far-field (resonant). In inductive wireless power transfer systems, power is transferred over short distances by magnetic fields using inductive coupling between a transmitting coil and a receiving coil. Inductive wireless power transfer systems are most commonly used in wireless technology.

Conventional inductive wireless power transfer systems often require a perfect alignment between the transmitter and receiver coils in order to enable power transfer (at least with sufficient power transfer) to perform desired functionality, such as charging a rechargeable battery. One problem with such a configuration is that the precision of alignment can limit the structural geometry of the wireless power transfer system, as the transmitting coil and the receiving coil must be mechanically placed at a specific position relative to one another. In other words, conventional inductive wireless power transfer systems are specifically designed for one particular device or application and may not be capable of supporting other devices or applications. As such, there is a need for a more versatile wireless power transfer system that is capable of providing power transfer to any number of devices or applications through inductive coupling.

### SUMMARY

To overcome the shortcomings of conventional inductive wireless power transfer systems, such as a cradle-shaped wireless power transfer system for recharging a barcode scanner, for example, a wireless charger adapter or wireless adapter may be utilized. The wireless charger adapter may be configured to be placed in proximate location to a wireless charging device having an inductive transmit coil. One embodiment of a wireless charging device may include a cradle for receiving and charging a barcode scanner. The wireless charger adapter may include a receiving inductor coil, which can inductively receive wireless power signals transferred by the transmit coil of the wireless charging device. The wireless charger adapter may include an electrical circuit to transform the wireless power signals to electrical signals. The wireless charger adapter may include at least one output port, adapter antenna, and/or transmitting coil to receive and/or output wireless signals so that the wireless charger adapter can facilitate power transfer between the wireless charging device and a secondary device, even if the secondary device does not mechanically align with the wireless charging device. Because the wireless power transfer system may provide for a data communications channel, the wireless charger adapter may be configured to support data communications channel, as well.

In a first aspect thereof, the present invention relates to a wireless adapter as recited in claim 1.

Accordingly, the wireless adapter includes a structural member configured to be placed in proximate location with at least a portion of a housing of a wireless charging device. The wireless charging device is inclusive of a first transmit inductor coil. The wireless adapter further includes a first receive inductor coil supported by the structural member, and configured to inductively receive wireless power signals inductively transferred by the first transmit inductor coil of the wireless charging device. The wireless adapter further includes an electrical circuit configured to convert the wireless power signals received by the first receive inductor coil into electrical signals. The wireless adapter further includes an output configured to output the electrical signals from the electrical circuit to one or more external devices.

Preferably, the output includes at least one of (i) an output port configured to output the electrical signals from the electrical circuit therefrom, (ii) a second transmit inductor coil configured to output second wireless power signals generated from the electrical signals to the one or more external devices inclusive of a second receive inductor coil, (iii) an adapter antenna configured to transmit or receive data signals or (iv) a multi-battery charger.

Preferably, the wireless adapter further includes electronics configured to amplify data signals received from the wireless charging device the output includes the adapter antenna, and the adapter antenna is configured to wireless transmit the amplified data signals with a longer range than the wireless charging device.

Preferably, the wireless adapter is configured to receive the data signals via the adapter antenna from a barcode scanner and transmit the data signals to the wireless charging device via a data channel between the wireless adapter and the wireless charging device.

Preferably, the structural member includes a non-planar surface at which the first receive inductor coil is positioned and is complementary to a non-planar surface of the wireless charging device at which the first transmit inductor coil of the wireless charging device is positioned.

Preferably, the first receive inductor coil is substantially aligned with the first transmit inductor coil of the wireless charging device when the structural member interfaces with the housing of the wireless charging device.

Preferably, the housing of the wireless charging device comprises a cradle and the wireless charging device is configured to charge a barcode scanner when the barcode scanner is positioned in the cradle.

Preferably, the electrical circuit is configured to modify an electrical output voltage of the electrical signals based on a device type of an external device electrically coupled to the output.

In a second aspect thereof, the present invention relates to a system as recited in claim 9.

Accordingly, the system includes a barcode scanner having a second receive inductor coil and a wireless charging device provided in a housing and inclusive of a first transmit inductor coil. The barcode scanner is configured to interface with the housing to inductively receive power via the second receive inductor coil from the first transmit inductor coil. The system includes a wireless adapter, wherein the wireless adapter includes a structural member configured to be placed in proximate relation with at least a portion of a housing of a wireless charging device. The wireless charging device is inclusive of a first transmit inductor coil. The wireless adapter further includes a first receive inductor coil supported by the structural member, and configured to inductively receive wireless power signals inductively transferred by the first transmit inductor coil of the wireless charging device. The wireless adapter further includes an electrical circuit configured to convert the wireless power signals received by the first receive inductor coil into electrical signals. The wireless adapter further includes an output configured to output the electrical signals from the electrical circuit to one or more external devices.

Preferably, the output of the wireless adapter includes at least one of (i) an output port configured to output the electrical signals from the electrical circuit therefrom, (ii) a second transmit inductor coil configured to output second wireless power signals generated from the electrical signals to the one or more external devices inclusive of a second receive inductor coil, (iii) an adapter antenna configured to transmit or receive data signals, or (iv) a multi-battery charger.

Preferably, the wireless adapter further includes electronics configured to amplify data signals received from the wireless charging device, the output comprises the adapter antenna, and the adapter antenna is configured to wirelessly transmit the amplified data signal with a longer range than the wireless charging device.

Preferably, the wireless adapter is configured to receive the data signals via the adapter antenna from a barcode scanner and transmit the data signals to the wireless charging device via a data channel between the wireless adapter and the wireless charging device.

Preferably, the structural member includes a non-planar surface at which the first receive inductor coil is positioned and is complementary to a non-planar surface of the wireless charging device at which the first transmit inductor coil of the wireless charging device is positioned.

Preferably, the first receive inductor coil is substantially aligned with the first transmit inductor coil of the wireless charging device when the structural member interfaces with the housing of the wireless charging device.

Preferably, the housing of the wireless charging device comprises a cradle configured to support the barcode scanner when the barcode scanner interfaces with the cradle, and wherein the cradle is further configured to support the wireless adapter when the wireless adapter interfaces with the cradle.

Preferably, the electrical circuit is configured to modify an electrical output voltage of the electrical signals based on a device type of an external device electrically coupled to the output.

Preferably, the wireless adapter is configured to transmit data to the wireless charging device via a data channel between the wireless adapter and the wireless charging device.

In a further aspect thereof, the present invention relates to a method as recited in claim 13.

Accordingly, the method includes receiving, by a wireless adapter including a receive inductor coil, wireless power from a wireless charging device including a transmit inductor coil. The method further includes receiving, by the wireless adapter, a data signal from a barcode scanner. The data signal is transmitted by the wireless adapter to the wireless charging device via a data channel between the adapter and the wireless charging device.

Preferably, the data signal is wirelessly received from the barcode scanner.

Preferably, the wireless charging device has a first wireless range for communicating the data signal and the wireless adapter has a second wireless range greater than the first wireless range for communicating the data signal.

### BRIEF DESCRIPTION OF THE DRAWINGS

Illustrative embodiments of the present invention are described in detail below with reference to the attached drawing figures, which are incorporated by reference herein and wherein:
**FIG. 1** is an illustration of a barcode scanner cradle, according to an illustrative embodiment of the present invention;
**FIG. 2** is an illustration of a portion of the barcode scanner cradle of figure 1;
**FIG. 3** is an illustration of a wireless charging system, according to an illustrative embodiment of the present invention;
**FIG. 4** is an illustration of a wireless charging system, according to another illustrative embodiment of the present invention;
**FIG. 5** is an illustration of a wireless charging system, according to another illustrative embodiment of the present invention;
**FIG. 6** is an illustration of a block diagram of a wireless charging system, according to an illustrative embodiment of the present invention; and
**FIG. 7** is a flow diagram of an illustrative process for transmitting data and power from a wireless charging device, according to an illustrative embodiment of the present invention.

### DETAILED DESCRIPTION

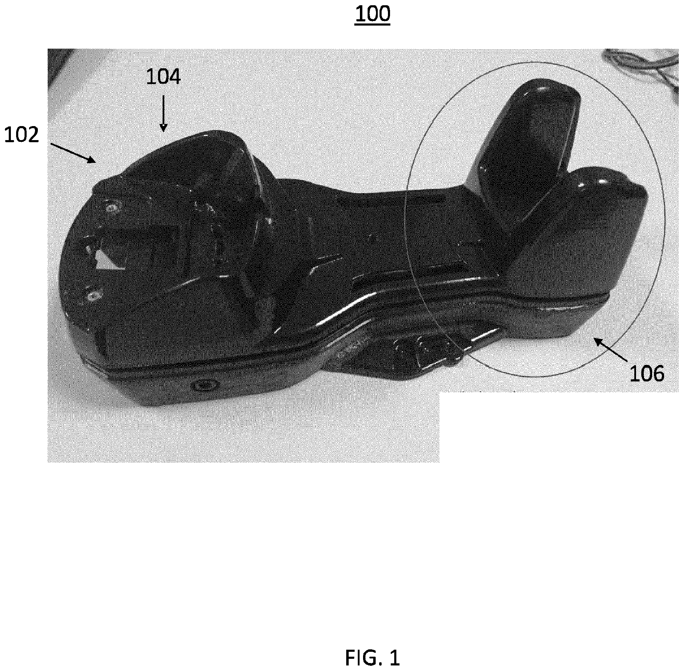

**FIG. 1** is an illustration of a portion of a system **100** that includes a wireless charging device **102.** For example, the wireless charging device **102** may be or may include any device capable of providing power wirelessly (e.g., inductively via a transmit inductor coil) to a secondary device. In some cases, the wireless charging device **102** may be or may include a cradle to receive and provide power to a scanner or imager of machine-readable indicia (e.g., barcodes), such as a barcode scanner, Near-field Communication (NFC) reader, or a radio frequency identification reader (RFID reader) (not shown). Other wireless charging devices with cradles may include portable telephones with wireless charging coils. For illustrative purposes, the wireless charging device **102** is described herein as supporting a barcode scanner. It should be understood that the wireless charging device **102** may be configured to receive and/or provide power to various other devices, such as scanners or imagers. The wireless charging device **102** may include a first end **104** and a second end **106.** In some cases, the first end **104** may oppose the second end **106,** as shown in **FIG. 1****.** The first end **104** may receive a first portion (e.g., an end including an imaging device) of a barcode scanner (not shown) and the second end **106** may receive a second portion (e.g., an end having a handle) of the barcode scanner. Upon receiving the barcode scanner, the wireless charging device **102** may be configured to charge the barcode scanner by electrically sensing a receive coil being placed in inductive proximity with a transmit coil) within the wireless charging device **102** or causing a switch to activate the wireless power transfer, or otherwise by simply placing the barcode scanner onto the charging device **102** that is always applying wireless power from the transmit coil.

The wireless charging device **102** may be configured to provide the barcode scanner wireless electrical charge to recharge a rechargeable battery, for example. The second end **106** may include one or more transmit coils (not shown, but positioned within regions defined by a housing). The transmit coils may include inductors, antennas, or any other devices or components configured to wirelessly transmit power over a distance. Similarly, the barcode scanner may include one or more receive coils. The receive coils may include inductors, antennas, or any other devices or components configured to wirelessly receive power over a distance. To transfer power from the wireless charging device **102** to the barcode scanner, the barcode scanner and/or the wireless charging device **102** may be designed or be configured such that the barcode scanner aligns with a portion of the wireless charging device **102** (e.g., such that the transmit coil aligns with a receive coil within the barcode scanner). For example, upon receiving the second portion of the barcode scanner at the second end **106** of the wireless charging device **102,** a transmit coil of the wireless charging device **102** may be aligned with a receive coil of the barcode scanner, thereby causing wireless power signals to be inductively transferred to the receive coil of the barcode scanner and thereby charge the barcode scanner (e.g., charge one or more rechargeable batteries or other power sources of the barcode scanner). In some embodiments, the receive coil of the barcode scanner may be in alignment with one or more portions of the second end **106** of the wireless charging device **102** (e.g., which corresponds to a location of the transmit coil of the wireless charging device **102)** when the barcode scanner is positioned on the wireless charging device **102.** When the receive coil of the barcode scanner is in alignment with the transmit coil, the transmit coil may be inductively (or electrically) coupled with the receive coil to facilitate transfer of power between the wireless charging device **102** and the barcode scanner. It should be understood that the receive coil extending within the barcode scanner may include more than one receive coil. It should also be understood that the wireless charging device **102** may include a variety of other configurations to provide an electrical charge to the barcode scanner. Still yet, if a data communications channel exists to download data, for example, data signals may be communicated therebetween.

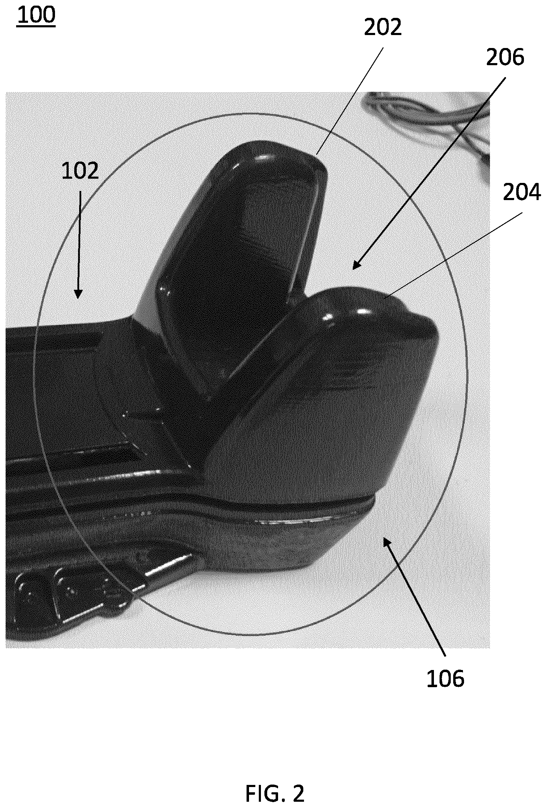

**FIG. 2** is an illustration of a portion of the wireless charging device **102.** Specifically, **FIG. 2** depicts a close-up view of the second end **106** of the wireless charging device **102,** which may receive a portion of a handle of the barcode scanner. The second end **106** may include a first extension **202** and a second extension **204.** In some embodiments, either the first extension **202** or the second extension **204** may house the transmit coil to perform wireless charging. In some embodiments, both the first extension **202** and the second extension **204** may house respective transmit coils. The wireless charging device **102** can include a space **206** located at least partially between the first extension **202** and the second extension **204.** Alternatively, the transmit coil(s) may be positioned beneath a base surface between the first and second extensions **202** and **204.** For example, the space **206** may be or may include any opening, aperture, surface, or the like configured to receive a portion of the barcode scanner. In some embodiments, one or more walls, extensions, and/or protrusions may at least partially surround the space **206** such that movement of the barcode scanner is at least partially inhibited when the second end **106** receives the barcode scanner. As described above with reference to **FIG. 1****,** the space **206** may define a surface contour which is complementary to a portion (e.g., the second portion) of the barcode scanner such that a receive coil within the barcode scanner is positioned in proximity to and substantially aligned with at least one transmit coil located within the first extension **202** and/or the second extension **204.** The space **206** may be configured to receive another component of the system **100.** For example, the space **206** may be configured to receive a portion of a wireless charger adapter **302,** as will be described in greater detail herein.

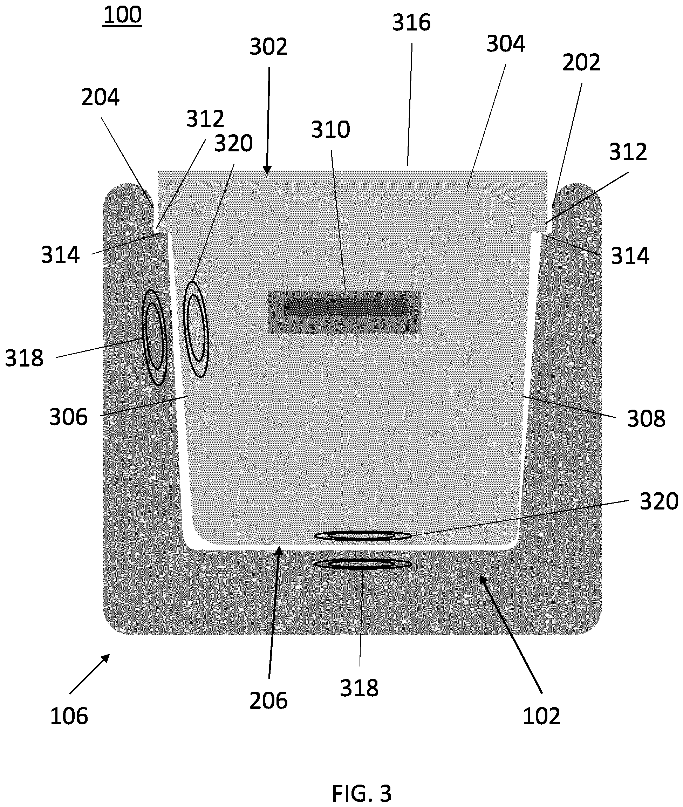

**FIG. 3** is a rear view of the second end **106** of the wireless charging device **102.** As shown in **FIG. 3****,** the wireless charger adapter **302** may position within and/or position proximate (e.g., on top of, adjacent to, etc.) the space **206** between the first extension **202** and the second extension **204.** In the adapter **302** being in proximate location or position with the wireless charging device **102,** the two devices **302** and **102** are to be close enough to enable inductive charging to occur. In some embodiments, the wireless charger adapter **302** may include a housing with a profile that reflects the profile of housing that defines the space **206** between the first extension **202** and the second extension **204.** For example, the wireless charger adapter **302** may include a specific geometric structure that is configured to conform to (i.e., is complementary to) a portion of the wireless charging device **102.** In some embodiments, the wireless charger adapter **302** may include at least one portion that extends substantially parallel with a portion of the wireless charging device **102** in which a wireless transmit coil **318** is positioned. For example, the wireless charger adapter **302** may include a housing **304** that may be or may include a structural member to house and/or support the components of the wireless charger adapter **302** (e.g., such a receive coil **320** described in greater detail below). The housing **304** may include at least one surface that extends substantially parallel to a portion of the first extension **202** of the wireless charging device **102.** For example, a first wall **306** of the housing **304** may extend substantially parallel to an interior-facing surface (e.g., facing the space **206)** of the first extension **202** of the wireless charging device, and a second wall **308** may extend substantially parallel to an interior-facing surface (e.g., facing the space **206** and opposite the interior-facing surface of the first extension **202)** of the second extension **204.** It should be noted that the housing **304** may include a variety of shapes. For example, in some embodiments, the housing **304** may include additional or less walls (e.g., heptagonal in shape) than that shown in **FIG. 3****.** In some embodiments, the housing **304** may include one or more rounded or arcuate portions to facilitate coupling and alignment with the wireless charging device **102.**

The first wall **306** of the housing **304** of the wireless charger adapter **302** may be non-planar in some embodiments. For example, the first wall **306** may include at least one portion that is non-planar such that the non-planar portion may be configured to be positioned adjacent to and/or complementary to (e.g., interface with) the surface of the first extension **202.** The second wall **308** of the housing **304** of the wireless charger adapter **302** may additionally and/or alternatively be non-planar portion. For example, the second wall **308** may include at least one portion that is non-planar such that the non-planar portion may be configured to position adjacent to and/or complementary to (e.g., interface with) the surface of the second extension **204.** Various other portions of the housing **304** may include one or more non-planar portions to facilitate coupling and alignment with the wireless charging device **102.**

The wireless charger adapter **302** may include one or more additional components to facilitate interfacing with the second end **106** of the wireless charging device **102.** For example, the wireless charger adapter **302** may include one or more protrusions **312** that extend from a portion of the housing **304** to interface with a portion of the wireless charging device **102,** such as a complementary inward-extending wall **314** of the first extension **202** and/or the second extension **204.** The inward-extending wall **314** may protrude in an opposite direction as the protrusion **312** such that a bottom portion of the protrusion can interface with a top portion of the wall **314.** In some embodiments, the protrusion **312** may engage with a portion of the inward-extending wall **314** of the wireless charging device **102** such that the contact between the protrusion **312** and the wall **314** facilitates maintaining the housing **304** in place within the space **206.** In some embodiments, the housing **304** includes a substantially flat surface **316** at a top portion of the housing **304** as shown in **FIGS. 3-5****.** The flat surface **316** may be sized to receive or otherwise support one or more devices (e.g., a device may be placed on top of and maintained on top of the housing **304).** In some embodiments, the top surface of the housing **304** may include one or more curved or actuate portions (e.g., a different shaped cradle). It should be noted that the housing **304** may include a variety of geometric configurations to interface with one or more portions of the wireless charging device **102** and perform the same functions.

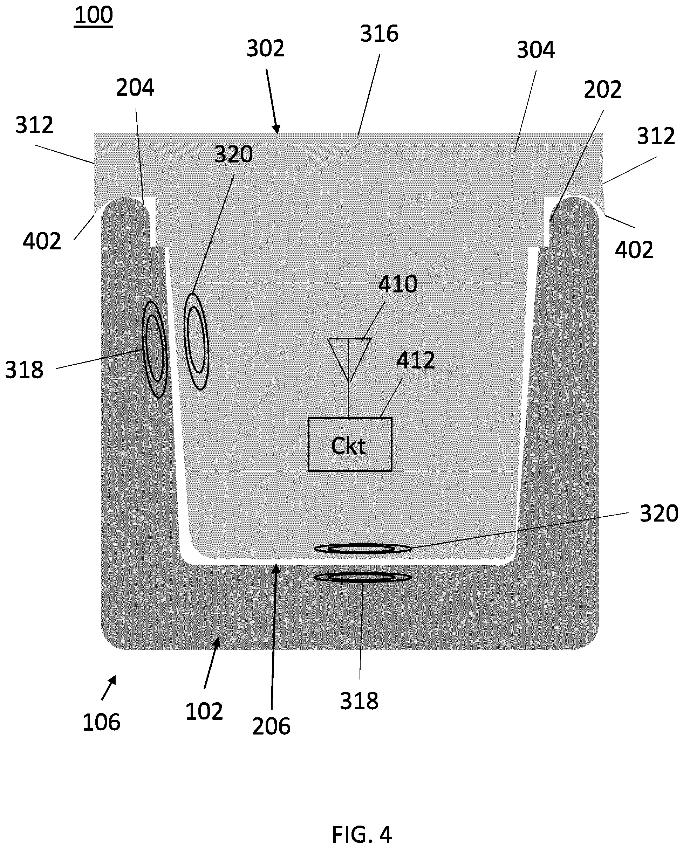

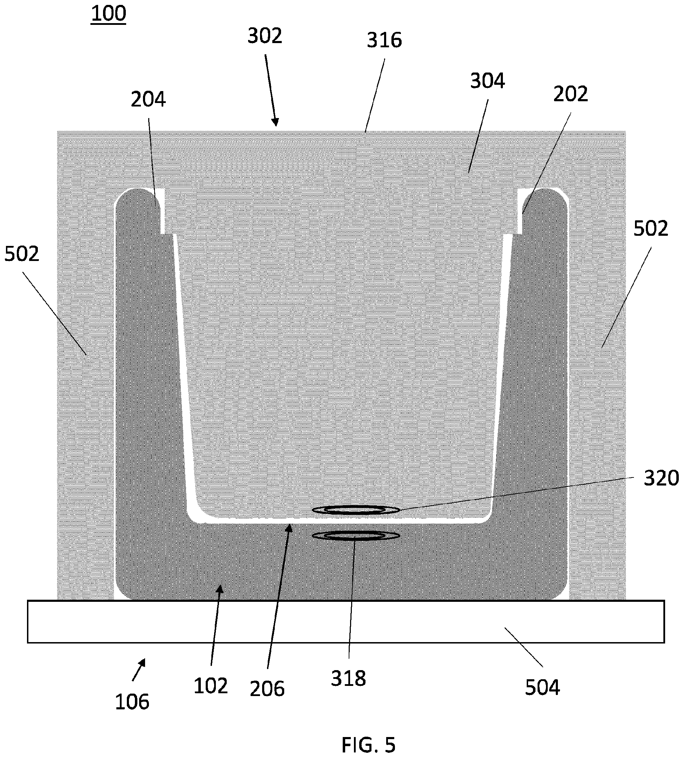

**FIGS. 4** and **5** illustrate various configurations of the housing **304** of the wireless charger adapter **302** that interface with the second end **106** of the wireless charging device **102.** For example, as shown in **FIG. 4****,** the protrusions **312** may extend over a portion of one or both of the first extension **202** and the second extension **204.** In some embodiments, the protrusion **312** may include at least one portion that mechanically aligns with a complementary portion of the wireless charging device **102.** For example, in some embodiments, the first extension **202** and/or the second extension **204** may include an arcuate portion. In such embodiments, the protrusion **312** may include at least one complementary arcuate portion that may interface with the first extension **202** and/or the second extension **204.** Similarly, in some embodiments, the first extension **202** and/or the second extension **204** may include a planar portion. In such embodiments, the protrusion **312** may include a complementary planar portion that may interface with the first extension **202** and/or the second extension **204.** In some embodiments, one or more protrusions **312** may include at least one portion that extends around a portion of the first extension **202** and/or the second extension **204** to facilitate inhibiting movement and/or rotation of the housing **304.** For example, as shown in **FIG. 4****,** the protrusion **312** may include a hook portion **402** that at least partially surrounds and optionally rests on a portion of the first extension **202** and/or the second extension **204.**

In some embodiments, the wireless charger adapter **302** may include one or more legs **502** that extend from a portion of the housing **304,** as shown in **FIG. 5****.** For example, the legs **502** can extend along the length of a portion of the wireless charging device **102.** In some embodiments, the legs **502** may extend the same length as the longest portion of the first extension **202** and/or the second extension **204** (e.g., in a direction perpendicular to a direction extending between the first end **104** and the second end **106** of the wireless charging device **102).** In some embodiments, the length of the legs **502** may exceed the length of the longest portion of the first extension **202** and/or the second extension **204** such that the legs **502** may engage with and/or interface with a support **504** positioned at a bottom portion of the wireless charging device **102.** For example, the support **504** may be or may include a surface on which the wireless charging device **102** is positioned (e.g., a table, a desk, a floor, etc.). The legs **502** may contact with and/or engage with the support **504** to facilitate maintaining the housing **304** in place. The adapter **302** may extend over a portion or the entire wireless charging device **102.** For example, the legs **502** may contact the support **504** such that rotation and/or movement of the housing **304** within and/or in proximity to the space **206** is at least partially inhibited. In some embodiments, the legs **502** may include one or more bent and/or arcuate portions (not shown) to reflect a profile of an external portion of the wireless charging device **102.** Feet (not shown) may be positioned on a bottom surface of the legs, where the feet may be of a material (e.g., soft rubber, silicone, etc.) that resists scratching a surface and provides friction to the surface to resist movement.

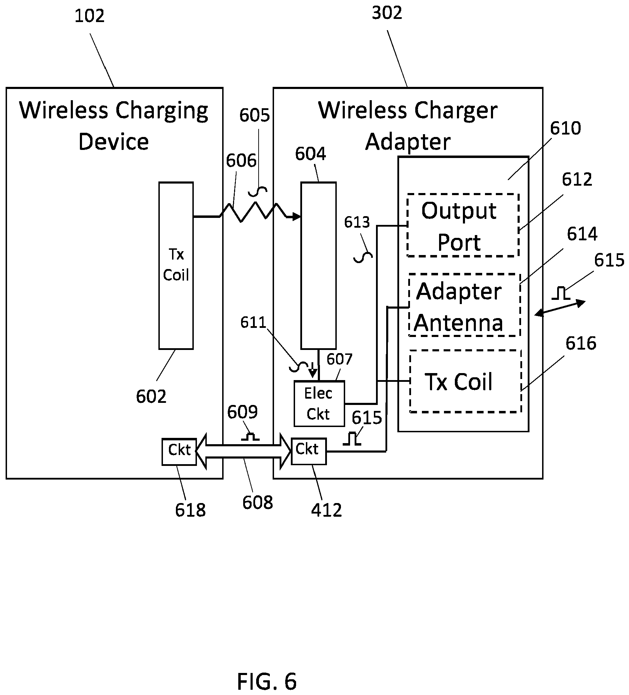

Referring to **FIGS. 3** - **5** in connection with **FIG. 6****,** the wireless charging device **102** may provide an electrical charge (e.g., electrical signals) to various different types of external devices via the wireless charger adapter **302.** For example, the wireless charging device **102** may inductively transfer a wireless power signal **605** via a wireless power channel **606** to the wireless charger adapter **302.** As described above, the wireless charger adapter **302** may be configured to align proximate or within the second end **106** of the wireless charging device **102.** The wireless charger adapter **302** may include at least one wireless receive coil **604** (shown as coil **320** in **FIGS. 3 -5****)** configured to receive wireless power signals from a wireless transmit coil **602** (shown as coil **318** in **FIGS. 3-5****)** of the wireless charging device **102.** For example, the first extension **202** may include a transmit coil **602** and/or the second extension **204** may include a transmit coil **602.** Alternatively, the wireless transmit coil **602** may be positioned beneath a flat surface between the extensions **202** and **204.** In an embodiment, if the wireless charging device **102** has a single transmit coil, then only a single receive coil on one external device may inductively couple with the transmit coil at a time (i.e., device A may be inductively connected, device A may then be disconnected and device B may be inductively connected, etc.). In an embodiment in which multiple transmit coils exist, it may be possible to have multiple external devices be inductively coupled to the individual transmit coils at a time. It may also be possible to have an external device (e.g., multi-battery charger pack) with multiple receive coils in the embodiment in which the wireless charging device **102** includes multiple transmit coils, thereby increasing the amount of wireless power that may be received from the wireless charging device **102** to potentially increase speed of recharging rechargeable batteries, for example.

The receive coil **604** of the wireless charger adapter **302** may position along the first wall **306** and/or the second wall **308** of the housing **304** of the wireless charger adapter **302.** Accordingly, upon placing the wireless charger adapter **302** with the one or more receive coils **604** of the wireless charger adapter **302** in proximity and oriented properly with a transmit coil **602** of the wireless charging device **102,** the transmit coil **602** may transfer the wireless power signal via the wireless power channel **606** to the receive coil **604** of the wireless charging device **102.** It should be understood that although the wireless charging device **102** and wireless charger adapter **302** have been described as utilize inductive charging, that alternative configurations may provide for resonant wireless charging, as described in co-pending U.S. patent application 17/551,025 filed on December 14, 2021; the contents of which are incorporated herein by reference in their entirety.

The wireless charger adapter **302** may include outputs **610** configured to output electrical signals to one or more external devices. For example, the wireless charger adapter **302** may include one or more electrical circuits **607** that are configured to convert the wireless power signals **605** received by the receive coil **604** and transmitted to the electrical circuit **607** as signal **611** into electrical output signals **613** to provide an electrical charge to a device electrically coupled to the wireless charger adapter **302.** In some embodiments, the wireless power signals **605** are communicated from the receive coil **604** to the electrical circuit **607** as electrical signals **611,** which may provide the output signals **613** to a load (e.g., lamp). In some embodiments, the external device includes the load. As described in greater detail below, the load may be a rechargeable battery of an electronic device, a light source or lamp, a local barcode reader or scanner, one or more electronic devices coupled to the wireless charger adapter **302** via a universal serial bus (USB) or other port, to name a few possibilities and non-limiting examples. The wireless charger adapter **302** may be integrated into a base or other portion of an electrical device, such as a lamp, antenna, etc., as well.

Referring back to **FIG. 3** and **4****,** the wireless charger adapter **302** may include various configurations of outputs **610.** For example, the outputs **610** may be or may include an output port **310,** shown in **FIG. 3****,** configured to output the electrical signals. The output port **310** may be or may include various standard output ports including, but not limited to, a Universal Serial Bus (USB) output port, a thunderbolt output port, a power outlet, an Ethernet output port, or the like. In some embodiments, the wireless charger adapter **302** may include a transmit coil (e.g., an adapter transmit coil **616** positioned within the housing **304** in addition to the adapter receive coil **604).** The adapter transmit coil **616** may be configured to process and/or output wireless power signals **613** generated from the electrical signals **611** to one or more external devices having a receive coil (e.g., in a similar manner as shown and described in **FIG. 6****).** In some embodiments, the adapter transmit coil **616** within the housing **304** of the wireless charger adapter **302** may be positioned adjacent to one or more interior walls of the housing **304** (e.g., just below the flat surface **316** shown in **FIG. 3****)** such that a device having a receive coil positioned proximate the wall of the housing **304** may receive wireless power signals from the transmit coil **616** of the wireless charger adapter **302.** It should be understood that alignment of the transmit coil **616** within the housing **304** and the external device may have a variety of configurations and provide the same on analogous functionality and/or electromagnetic properties. It should be understood that the wireless charger adapter **302** may have a number of different configurations and, optionally, be integrated into different external devices or accessories, where the different accessories may be configured to perform different functions (e.g., desk fan, desk light, clock, Internet radio, antenna, etc.). In cases where the adapter **302** is integrated into an accessory, the adapter **302** may simply power the accessory itself and not make power available to any other accessories, either via wire or wirelessly.

The wireless charger adapter **302** may include an adapter antenna **410,** as shown in **FIG. 4****.** For example, the adapter antenna **410** may be configured to transmit and/or receive wireless signals **615** to and/or from an external device. The adapter antenna **410** may be or may include various types of antennas including, but not limited to, dipole antennas, log printed antennas, array antennas, or the like to transfer and/or receive wireless signals **615,** such as power and/or data signals, to an external device. In some embodiments, the wireless charger adapter **302** may include circuit **412** configured to boost a signal **613** sent or received via the adapter antenna **410.** In other words, the wireless charger adapter **302** may include one or more antennas **410** such that the system **100** includes an additional antenna (e.g., in addition to one or more antennas already operably coupled to the wireless charging device **102)** to increase the range of the one or more antennas of the wireless charging device **102.** For example, an antenna of the wireless charging device **102** may include a gain of about 2 decibels per isotropic dB (dBi) without the wireless charger adapter **302.**

Upon receiving the wireless charger adapter **302** in proximity to the space **206** of the wireless charging device **102,** the adapter antenna **410** may be configured to receive wireless data signals **615** from another device in an environment of the wireless charger adapter **302** and transfer the wireless data signals **615** back to the wireless charging device **102** through circuits **412, 618** across data channel **608** (e.g., as the wireless signal **609).** Such implementations may provide for an increase in gain of the wireless charging device **102** (e.g., gain that is greater than 2 dBi, such as 20dBi). It should be understood that the wireless charging device **102** and the adapter antenna **410** may include a significantly greater gain. This example is for illustrative purposes only. Moreover, an adapter transceiver and amplifier circuit **412** may boost power of data signals received from the wireless charging device **102** for communication by the adapter **302** with more power, thereby communicating a longer distance than possible by the wireless charging device **102.**

The adapter antenna **410** may be configured to receive wireless signals from a device other than the wireless charging device **102,** such as the barcode scanner that is configured to align with the wireless charging device **102.** For example, the adapter antenna **410** may be configured to receive one or more wireless signals from the barcode scanner associated with the wireless charging device **102,** and transmit the wireless signals **609** to the wireless charging device **102** through one or more data channels **608** between the wireless charger adapter **302** and the wireless charging device **102,** as described in greater detail with reference to **FIG. 6** herein.

The wireless charger adapter **302** may be configured to transfer electrical power and data to any number of external devices through the outputs **610 (****FIG. 6****).** For example, the wireless charger adapter **302** may be configured to transfer signals to various lighting components (e.g., lamps), various electronic devices (e.g., mobile devices, smart watches, audio devices, etc.), desk fun (e.g., ferris wheel, spinning globe, multi-rechargeable battery pack charger, etc.) and/or similar devices. In some embodiments, the wireless charger adapter **302** may be configured to transfer power wirelessly to the one or more external devices. For example, as described above, the wireless charger adapter **302** may include an adapter transmit coil **616** to wirelessly transfer electrical signals to the external devices.

In some embodiments, the adapter transmit coil **616** may be located along a top or topmost portion of the housing **304** of the wireless charger adapter **302** such that the adapter transmit coil **616** is located proximate the top flat surface **316** of the housing **304** shown in **FIG. 3****.** In such implementations, the flat surface **316** may receive a portion of the external device (e.g., a mobile device, watch, lighting component, etc.) placed on top of the flat surface **316** having a receive coil that may receive wireless signals from the adapter transmit coil **616** of the wireless charger adapter **302** for powering the external device. A wire line connection may alternatively be possible via a connector on the adapter **302.** In some embodiments, a transmit coil may be located proximate one or more sidewalls of the housing **304** (e.g., the portion of the housing **304** having the output port **310** shown in **FIG. 3****)** such the transmit coil of the wireless charger adapter **302** may transfer wireless signals to the external device upon receiving a portion of the external device adjacent the wall (e.g., a mobile device, watch, etc. set next to and/or up against the housing **304).** A mount for retaining the external device in proximate location to one or more adapter transmit coils may be positioned on the housing **304.**

In some embodiments, the wireless charger adapter **302** may be configured to transmit electric signals through one or more wires and/or cables. For example, as described above, the wireless charger adapter **302** may include one or more output ports **310** configured to transmit signals to the external devices. The output ports **310** may be configured to transmit signals to the external device upon receiving a complementary cable communicably coupled to the external device (e.g., a USB cable electrically coupled to the output port **310** and to the device). The wireless charger adapter **302** may be configured to transmit electrical signals to one or more rechargeable power sources. For example, the wireless charger adapter **302** may be configured to transmit electric signals to a rechargeable battery pack or similar device through one or more cables electronically coupled to the wireless charger adapter **302** and/or the rechargeable battery pack, such as an Ethernet or USB cable. The wireless charger adapter 302 may be integrated into a multi-battery charger to recharge rechargeable battery packs.

**FIG. 6** is a schematic of an illustrative electrical system **100** of the wireless charging device **102** and wireless shown in **FIG. 1-5****.** For example, the electrical system **100** may include the wireless charging device **102** (e.g., a receiver and/or cradle for a barcode scanner) having at least one transmit coil **602** and the wireless charger adapter **302** having at least one receive coil **604.** As described above, the wireless charger adapter **302** includes outputs **610.** The outputs **610** may be or may include any of an output port **612** (described above as output port **310** with reference to **FIG. 3****),** an adapter antenna **614** (described above as adapter antenna **410** with reference to **FIG. 4****),** and/or an additional adapter transmit inductor coil **616.**

As depicted, the wireless charging device **102** may transmit wireless power signals **605** to the wireless charger adapter **302** via a wireless power channel **606** (e.g., via an inductive electromagnetic field). In some embodiments, the wireless charging device **102** may additionally and/or alternatively transmit and/or receive data signals **609** via a data channel **608** (e.g., via one or more antennas, antenna array systems, Bluetooth, Wi-fi, endpoints or data terminals of the wireless charging device **102** and the wireless charger adapter **302,** etc.). In other words, the data channel **608** may include either or both wired (e.g., contact-based) and wireless data connections. For example, as described above, the wireless charger adapter **302** may be configured to transmit and/or receive the wireless data signals **609** to and/or from the wireless charging device **102** via the data channel **608** through the adapter antenna **614.** In some embodiments, the wireless data signals **609** transmitted via the adapter antenna **614** may be received from the barcode scanner associated with the wireless charging device **102.** In some embodiments, the adapter antenna **614** may transmit and/or receive data signals **609** via the data channel **608,** convert the data signals **609** (e.g., boost or reduce power) into data signals **614,** and communicate the data signals **615** to or from one or more external devices including, but not limited to, an NFC reader, a secondary barcode reader, a QR code reader, or other device (e.g., digital clock). For example, the wireless data signals **609** may include, but are not limited to, data corresponding to machine-readable indicia scanned by an imaging device of the barcode scanner.

In some embodiments, the wireless charger adapter **302** may be configured to transmit and/or receive the data signals **609** to and/or from the wireless charging device **102** via the data channel **608** through the output port **612.** An external device may electrically couple to the output port **612** via one or more cables (e.g., a USB) that includes a data line to form the data channel **608.** For example, the wireless charger adapter **302** may be configured to transmit the data signals **615** (e.g., information related to machine-readable indicia scanned by the barcode scanner) from the wireless charging device **102** to a mobile device electrically coupled to or in communication with the adapter antenna **614.** It should be noted that the wireless charger adapter **302** may be configured to transmit and/or receive the data signals **615** from various other devices.

In some embodiments, the wireless charger adapter **302** may be configured to modify (e.g., increase or decrease voltage, convert from AC to DC, etc.) the electrical signals **611** based on a type of external device electrically coupled to the output **610.** The wireless charger adapter **302** may include electrical power converter or conditioning circuity designed or implemented to step-up or step-down a voltage, amperage, or wattage based on a device type for the external device. For instance, the wireless charger adapter **302** may be configured to receive (e.g., via a data channel or other communication channel) from the external device, a power requirement (e.g., power type, power level, etc.) for the external device. The wireless charger adapter **302** may be configured to modify the output to the external device based on the power requirement of the external device. In other words, the electrical circuit **607** of the wireless charger adapter **302** may be configured to dynamically and automatically modify the output power of the electrical signals **611** to produce electrical signals **613** depending on the configuration of the external device. In some embodiments, the wireless charger adapter **302** may include one or more voltage regulators, voltage optimizers, voltage stabilizers, or voltage correctors to facilitate modifying the electrical circuit. By way of example, the electrical circuit **607** of the wireless charger adapter **302** may be configured to output a voltage of about 5V (e.g., between 3V - 8V, for instance) for a mobile device electrically coupled to the output **610.** As another example, the electrical circuit of the wireless charger adapter **302** may be configured to output a voltage of about 20V (e.g., between 10V - 30V, for instance) for a larger computing device (e.g., a laptop) electrically coupled to the output **610.** It should be noted that these examples are for illustrative purposes only. The electrical circuit **607** of the wireless charger adapter **302** may accommodate various other circumstances and/or devices.

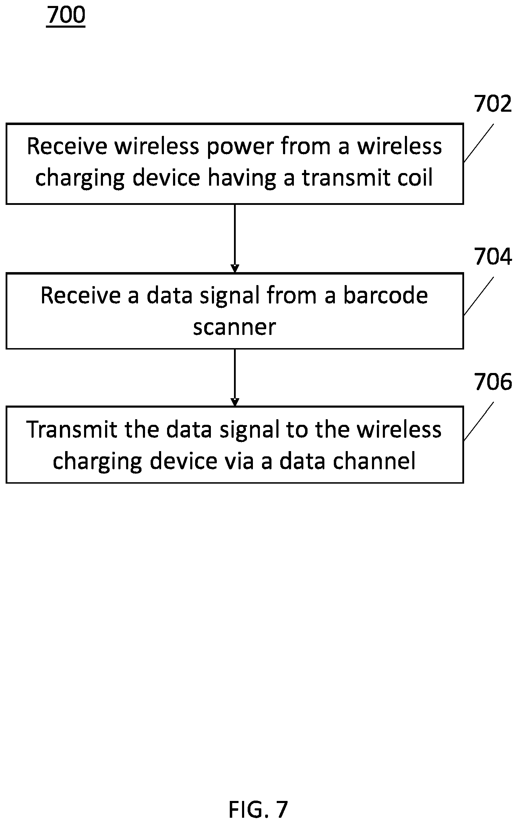

**FIG. 7** is an illustration of a flowchart of a method **700** of transmitting data and/or power from a wireless charging device. For example, the method **700** may include receiving, by a wireless charger adapter, wireless power signals from the wireless charging device at step **702.** For example, as described above with reference to **FIGS. 1-6****,** the wireless charging device **102** may include at least one transmit coil **602** to inductively or otherwise wirelessly transfer power signals to at least one receive coil **604** within the housing **304** of the wireless charger **302.** The transmit coil **602** may be positioned internal to and proximate with a first exterior wall of the wireless charging device **102** (e.g., within first extension **202** and/or second extension **204** of the wireless charging device **102).** The receive coil **604** may be positioned internal to and proximate with (e.g., adjacent) a first exterior wall of the wireless charger adapter **302** (e.g., within the housing **304** and proximate with the first wall **306** and/or the second wall **308** of the housing **304)** such that the transmit coil **602** of the wireless charging device **102** aligns with the receive coil **604** of the wireless charger adapter **302** upon placing the wireless charger adapter **302** in proximity to the first extension **202** and the second extension **204** of the wireless charging device **102.** If a resonant inductive wireless power transfer is utilized, then less stringent alignment is needed for the wireless power transfer.

At step **704,** the wireless charger adapter **302** may receive a data signal from a barcode scanner. For example, the wireless charger adapter **302** may receive one or more wireless data signals from the barcode scanner via the adapter antenna **614.** As described above, the adapter antenna **614** of the wireless charger adapter **302** may have a greater wireless range than the wireless range of the wireless charging device **102** such that the wireless charger adapter **302** facilitates extending the wireless range of the wireless charging device **102** to (e.g., to receive data signals from the barcode scanner associated with the wireless charging device **102,** even when the wireless charging device **102** is not capable of receiving data signals).

In some embodiments, the wireless charger adapter **302** may have a wireless range that is greater than a wireless range of the wireless charging device **102.** For example, if the wireless charging device **102** has a wireless range of about **100** meters (e.g., via an antenna of the wireless charging device **102),** the wireless charger adapter **302** may have a wireless range greater than 100 meters (e.g., via an amplifier and the adapter antenna **614),** such as **300** meters. It should be noted that this range is for illustrative purposes only. The wireless charging device **102** and wireless charger adapter **302** may have significantly greater and/or significantly lesser wireless ranges.

At step **706,** the wireless charger adapter may transmit the data signal to the wireless charging device via a data channel between the wireless charger adapter and the wireless charging device. For example, as described above, the wireless charger adapter **302** may be configured to transmit and/or receive wireless data signals to and/or from the wireless charging device **102** via the data channel **608** through the adapter antenna **614.**

The foregoing method descriptions and the process flow diagrams are provided merely as illustrative examples and are not intended to require or imply that the steps of the various embodiments must be performed in the order presented. As will be appreciated by one of skill in the art the steps in the foregoing embodiments may be performed in any order. Words such as "then," "next," etc. are not intended to limit the order of the steps; these words are simply used to guide the reader through the description of the methods. Although process flow diagrams may describe the operations as a sequential process, many of the operations may be performed in parallel or concurrently. In addition, the order of the operations may be re-arranged. A process may correspond to a method, a function, a procedure, a subroutine, a subprogram, etc. When a process corresponds to a function, its termination may correspond to a return of the function to the calling function or the main function.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the principles of the present invention.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

The previous description is of a preferred embodiment for implementing the invention, and the scope of the invention should not necessarily be limited by this description. The scope of the present invention is instead defined by the following claims.

## Claims

1. A wireless adapter (302), comprising:
a structural member configured to be placed in proximate relation with at least a portion of a housing of a wireless charging device (102) inclusive of a first transmit inductor coil (318, 602);
a first receive inductor coil (320, 604) supported by the structural member, and configured to inductively receive first wireless power signals (605) inductively transferred by the first transmit inductor coil (318, 602) of the wireless charging device (102);
an electrical circuit (607) configured to convert the first wireless power signals (605) received by the first receive inductor coil (320, 604) into electrical signals (611); and
an output (610) configured to output the electrical signals (611) from the electrical circuit (607) to one or more external devices.

2. The wireless adapter (302) of claim 1, wherein the output (610) includes at least one of (i) an output port (310) configured to output the electrical signals (611) from the electrical circuit (607) therefrom, (ii) a second transmit inductor coil (616) configured to output second wireless power signals (613) generated from the electrical signals (611) to the one or more external devices inclusive of a second receive inductor coil, (iii) an adapter antenna (410) configured to transmit or receive data signals (615), or (iv) a multi-battery charger.

3. The wireless adapter (302) of claim 2, wherein the wireless adapter further includes electronics configured to amplify data signals received from the wireless charging device (102) the output (610) includes the adapter antenna (410), and wherein the adapter antenna (410) is configured to wireless transmit the amplified data signals with a longer range than the wireless charging device (102).

4. The wireless adapter (302) of claim 3, wherein the wireless adapter (302) is configured to receive the data signals (615) via the adapter antenna (410) from a barcode scanner and transmit the data signals (615) to the wireless charging device (102) via a data channel (608) between the wireless adapter (302) and the wireless charging device (102).

5. The wireless adapter (302) of claim 1, wherein the structural member includes a non-planar surface at which the first receive inductor coil (320, 604) is positioned and is complementary to a non-planar surface of the wireless charging device (102) at which the first transmit inductor coil (318, 602) of the wireless charging device (102) is positioned.

6. The wireless adapter (302) of claim 5, wherein the first receive inductor coil (320, 604) is substantially aligned with the first transmit inductor coil (318, 602) of the wireless charging device (102) when the structural member interfaces with the housing of the wireless charging device (102).

7. The wireless adapter (302) of claim 1, wherein the housing of the wireless charging device (102) comprises a cradle and wherein the wireless charging device (102) is configured to charge a barcode scanner when the barcode scanner is positioned in the cradle.

8. The wireless adapter (302) of claim 1, wherein the electrical circuit (607) is configured to modify an electrical output voltage of the electrical signals (611) based on a device type of an external device electrically coupled to the output (610).

9. A system (100) comprising:
a barcode scanner having a second receive inductor coil;
a wireless charging device (102) including a housing and a first transmit inductor coil (318, 602) disposed therein, the barcode scanner configured to interface with the housing to inductively receive power via the second receive inductor coil from the first transmit inductor coil (318, 602); and
a wireless adapter (302) according to claim 1.

10. The system (100) of claim 9, wherein the housing of the wireless charging device (102) comprises a cradle configured to support the barcode scanner when the barcode scanner interfaces with the cradle, and wherein the cradle is further configured to support the wireless adapter (302) when the wireless adapter (302) interfaces with the cradle.

11. The system (100) of claim 9, wherein the electrical circuit (607) is configured to modify an electrical output voltage of the electrical signals (611) based on a device type of an external device electrically coupled to the output (610).

12. The system (100) of claim 9, wherein the wireless adapter (302) is configured to transmit data to the wireless charging device (102) via a data channel (608) between the wireless adapter (302) and the wireless charging device (102).

13. A method comprising:
receiving, by a wireless adapter (302) including a first receive inductor coil (320, 604), wireless power from a wireless charging device (102) including a first transmit inductor coil (318, 602);
receiving, by the wireless adapter (302), a data signal from a barcode scanner; and
transmitting, by the wireless adapter (302), the data signal to the wireless charging device (102) via a data channel (608) between the wireless adapter (302) and the wireless charging device (102).

14. The method of claim 13, wherein the data signal is wirelessly received from the barcode scanner.

15. The method of claim 14, wherein the wireless charging device (102) has a first wireless range for communicating the data signal and wherein the wireless adapter (302) has a second wireless range greater than the first wireless range for communicating the data signal.
